# EUROPÄISCHE PATENTANMELDUNG

(11) **EP 3 203 142 A1**
(43) Veröffentlichungstag der Anmeldung: **09.08.2017**
(21) Anmeldenummer: 17154504.9
(22) Anmeldetag: 03.02.2017
(51) Int. Cl.: F21V 5/00, F21S 8/10, F21V 13/02, G02B 13/12, G02B 19/00, F21Y 115/10, F21Y 105/10

(54) **LAMPE MIT FLÜSSIGLINSE**

(30) Priorität: 03.02.2016 DE 102016101845
(71) Anmelder: Zweibrüder Optoelectronics GmbH & Co. KG, 42699 Solingen (DE)
(72) Erfinder: Buhl, Erich, 42697 Solingen (DE)
(74) Vertreter: Patentanwälte Vomberg & Schart

(57) **Zusammenfassung**

Die vorliegende Erfindung betrifft eine Lampe, insbesondere eine fokussierbare Taschenlampe, einen Strahler oder eine Fahrzeugbeleuchtung mit mindestens einer Leuchteinheit (1) bestehend aus einer im Wesentlichen punktförmigen Lichtquelle (2) und einer Flüssiglinse (3), die in Abhängigkeit einer angelegten elektrischen Spannung eine variable und einstellbare Oberflächenkrümmung aufweist, wobei die Flüssiglinse (3) und die Lichtquelle (2) eine gemeinsame optische Achse (5) besitzen. Um eine schnelle Variation des abgestrahlten Lichtkegels mit einer größtmöglichen Varianz des Abstrahlwinkels gegenüber der optischen Achse (5) und des Öffnungswinkels des Lichtkegels zu ermöglichen, wird erfindungsgemäß vorgeschlagen, dass die Leuchteinheit (1) eine starre Vorsatzoptik (4) besitzt, die derart auf der optischen Achse (5) der Lichtquelle (2) und der Flüssiglinse (3) angeordnet ist, dass die Flüssiglinse (3) zwischen der Lichtquelle (2) und starren Vorsatzoptik (4) positioniert ist.

## Beschreibung

Die vorliegende Erfindung betrifft eine Lampe, insbesondere eine fokussierbare Taschenlampe, einen Strahler oder eine Fahrzeugbeleuchtung mit mindestens einer Leuchteinheit bestehend aus einer im Wesentlichen punktförmigen Lichtquelle und einer Flüssiglinse, die in Abhängigkeit einer angelegten elektrischen Spannung eine variable und einstellbare Oberflächenkrümmung aufweist, wobei die Flüssiglinse und die Lichtquelle eine gemeinsame optische Achse besitzen.

Eine derartige Lampe mit einer Flüssiglinse als einziger Vorsatzoptik ist beispielsweise aus DE 20 2007 004 527 U1 bekannt. Die hierin beschriebene Flüssiglinse ist im Vergleich zu Flüssiglinsen, wie sie beispielsweise in Handykameras oder ähnlichem Verwendung finden, vergleichsweise groß und daher bei der Veränderung der Abstrahlcharakteristik der Lampe träge. Die ausschließliche Verwendung von Miniatur-Flüssiglinsen mit einer deutlich geringeren Trägheit bei der Veränderung der Oberflächenkrümmung als Vorsatzoptik in Lampen oder Strahlern ist jedoch nur bedingt möglich und führt zu einem ungenügenden Ergebnis bei der Veränderung der Abstrahlcharakteristik.

Es ist daher die Aufgabe der vorliegenden Erfindung, eine Lampe mit einer Flüssiglinse vorzuschlagen, die eine schnelle Variation des abgestrahlten Lichtkegels mit einer größtmöglichen Varianz des Abstrahlwinkels gegenüber der optischen Achse und des Öffnungswinkels des Lichtkegels verbindet.

Diese Aufgabe wird durch die Lampe nach Anspruch 1 gelöst, wonach erfindungsgemäß vorgesehen ist, dass die Leuchteinheit eine starre Vorsatzoptik besitzt, die derart auf der optischen Achse der Lichtquelle und der Flüssiglinse angeordnet ist, dass die Flüssiglinse zwischen der Lichtquelle und starren Vorsatzoptik positioniert ist. Durch diese besondere Anordnung, nach der die starre Linse optisch der Flüssiglinse nachgeschaltet ist, ist es möglich, eine vergleichsweise kleine Flüssiglinse zu verwenden, die eine geringe Spannungsänderung eine schnelle und präzise Veränderung des Lichtkegels erlaubt, wobei die starre Linse überraschenderweise die Lichtkegelvariation derart verstärkt, dass die Erfordernisse an den möglichen Abstrahlwinkel und an den Öffnungswinkel des Lichtkegels erfüllt werden. Insbesondere bei der Verwendung der erfindungsgemäßen Leuchteinheit in Taschenlampen ergibt sich ein erhebliches Vorteilspotenzial, weil die Anfälligkeit von Flüssiglinsen bei etwaigen Erschütterungen abnimmt, je kleiner die Flüssiglinse ist. Insofern ist durch die erfindungsgemäße Leuchteinheit mit einer Anordnung der Flüssiglinse zwischen der Lichtquelle und einer starren Vorsatzoptik eine fokussierbare Linse gegeben, die auch im robusten Einsatz, beispielsweise von Einsatzkräften oder als Fahrradleuchte im Outdoor-Bereich (Mountainbike) einen stabilen und flackerfreien Lichtkegel erzeugt.

Bevorzugte Ausgestaltungen der Erfindung sind nachfolgend und in den Unteransprüchen angegeben.

Nach einer ersten bevorzugten Ausgestaltung der Erfindung ist vorgesehen, dass die Flüssiglinse quer zur optischen Achse einen vorzugsweise kreisförmigen Querschnitt aufweist und an der Peripherie der Flüssiglinse eine Mehrzahl von elektrischen Polen angeordnet sind, die mittels einer Steuereinheit ein beliebiges symmetrisches oder asymmetrisches elektrisches Feld erzeugen, so dass die Oberfläche der Flüssiglinse symmetrisch oder asymmetrisch verformbar ist. Durch die Anordnung einer möglichst hohen Anzahl von elektrischen Polen maximieren sich die Möglichkeiten für eine Veränderung des Lichtkegels, wobei der Lichtkegel nicht nur eine beliebige Winkellage gegenüber der optischen Achse und einen beliebigen Öffnungswinkel, sondern auch eine wählbare Intensitätsverteilung aufweisen kann. Hierdurch können beliebig geformte Flächen auch an schräg zu der Lampe angeordneten Wänden beleuchtet werden. Dabei ist die zur Verstärkung der Lichtkegelvariation verwendete starre Vorsatzoptik der Leuchteinheit eine Sammel- oder Zerstreuungslinse, die eine Fokussierung oder Defokussierung des von der Flüssiglinse verformten Lichtkegels bewirkt.

Nach einer weiteren bevorzugten Ausgestaltung der Erfindung ist vorgesehen, dass mehrere Leuchteinheiten eine Matrix bilden und jede Leuchteinheit unabhängig von einer anderen Leuchteinheit von der Steuereinheit ansteuerbar ist. Insbesondere für Fahrzeugbeleuchtungen mit einem anpassbaren Kurvenlicht ist eine solche Lampe mit mehreren Leuchteinheiten vorteilhaft, bei der in Abhängigkeit des Straßenverlaufs und/oder des Lenkradeinschlags zumindest bei einer der Leuchteinheiten der Matrix der Abstrahlwinkel des Lichtkegels gegenüber der optischen Achse durch die Veränderung des elektrischen Feldes an der Flüssiglinse verändert wird, um eine optimale Ausleuchtung der Fahrbahn zu ermöglichen.

Konkrete Ausgestaltungen der Erfindung werden anhand der Figuren erläutert, die Folgendes zeigen:
- Fig. 1 a-d:: schematische Querschnittsdarstellungen einer Leuchteinheit,
- Fig. 2:: eine Flüssiglinse in einer Draufsicht und
- Fig. 3a-c:: unterschiedliche Ausführungsbeispiele einer Matrix aus drei Leuchteinheiten.

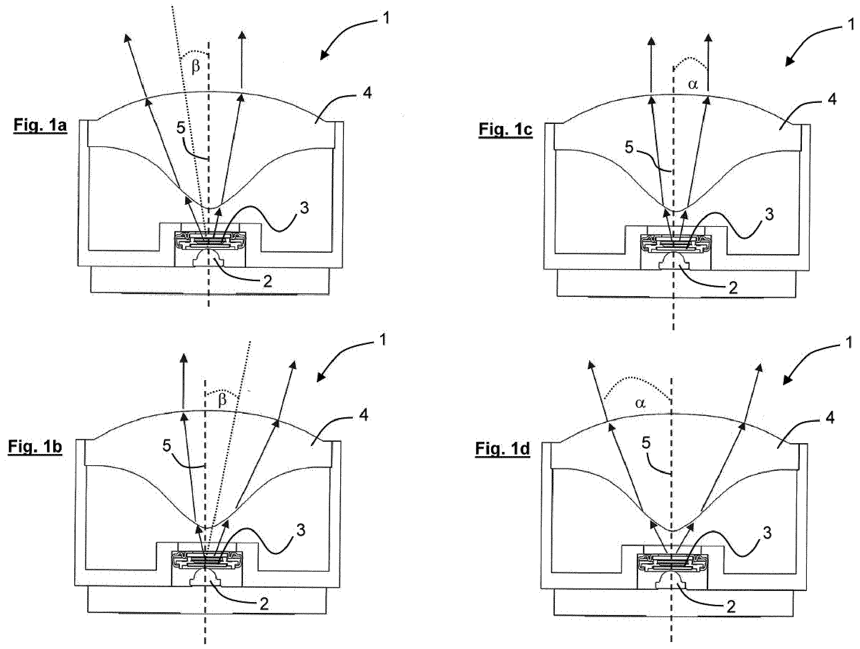

Eine Leuchteinheit 1 besteht im Wesentlichen aus einer punktförmigen Lichtquelle 2, die beispielsweise eine LED oder eine andere punktförmige Lichtquelle sein kann, einer Flüssiglinse 3 und einer starren Vorsatzoptik 4, die derart auf einer gemeinsamen optischen Achse 5 angeordnet ist, dass die Flüssiglinse 3 zwischen der starren Linse 4 und der Lichtquelle 2 positioniert ist. Die Flüssiglinse 3 weist in herkömmlicher Weise eine Flüssigkeit auf, deren Oberflächenkrümmung von einer angelegten elektrischen Spannung abhängig ist, so dass die Form des abgestrahlten Lichtkegels durch eine Variation der angelegten Spannung veränderbar ist. Insbesondere ist zunächst durch eine symmetrische Spannungsänderung eine Veränderung des Öffnungswinkels α des Lichtkegels möglich (siehe Fig. 1c und 1d). Ferner lässt sich durch eine asymmetrische Veränderung des elektrischen Feldes der Abstrahlwinkel β des Lichtkegels gegenüber der optischen Achse 5 ebenso einstellen, wie die Intensitätsverteilung innerhalb des Lichtkegels (siehe Fig. 1a und 1b).

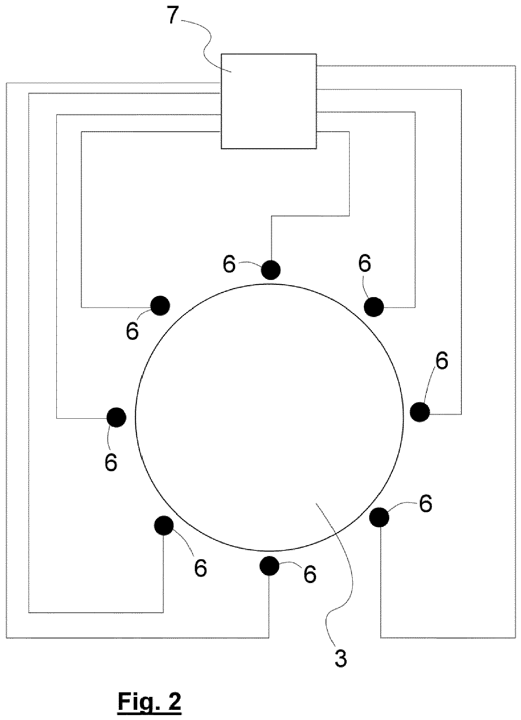

Fig. 2 zeigt in einer Draufsicht die Flüssiglinse 3 mit einer Vielzahl von elektrischen Polen 6, die an der Peripherie der Linse angeordnet sind und die mit einer Steuereinheit 7 verbunden sind.

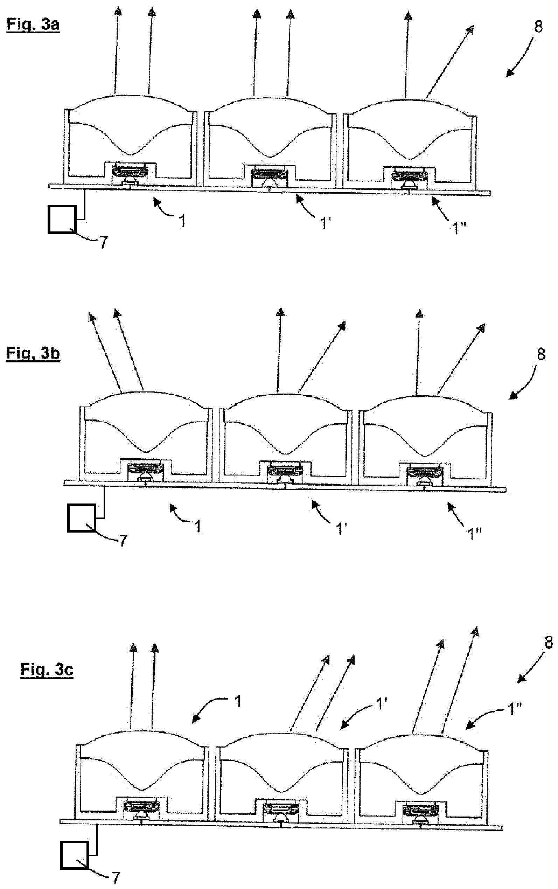

Fig. 3a zeigt an dem Beispiel einer Matrix 8 mit drei Leuchteinheiten 1, 1', 1" eine Lampe, die beispielsweise als Strahler oder als Fahrzeugbeleuchtung mit einem anpassbaren Kurvenlicht ausgebildet sein kann. Mittels der Steuereinheit 7 können die Abstrahlcharakteristiken der Lampeneinheiten 1, 1', 1" separat und unabhängig voneinander angesteuert werden, was die gewünschte Ausleuchtung erlaubt. Nur beispielshaft sind verschiedene Abstrahlvarianten von Lichtkegeln in den Figuren dargestellt.

## Patentansprüche

1. Lampe, insbesondere fokussierbare Taschenlampe, Strahler oder Fahrzeugbeleuchtung mit mindestens einer Leuchteinheit (1) bestehend aus einer im Wesentlichen punktförmigen Lichtquelle (2) und einer Flüssiglinse (3), die in Abhängigkeit einer angelegten elektrischen Spannung eine variable und einstellbare Oberflächenkrümmung aufweist, wobei die Flüssiglinse (3) und die Lichtquelle (2) eine gemeinsame optische Achse (5) besitzen,
**dadurch gekennzeichnet, dass**
die Leuchteinheit (1) eine starre Vorsatzoptik (4) besitzt, die derart auf der optischen Achse (5) der Lichtquelle (2) und der Flüssiglinse (3) angeordnet ist, dass die Flüssiglinse (3) zwischen der Lichtquelle (2) und der starren Vorsatzoptik (4) positioniert ist.

2. Lampe nach Anspruch 1, **dadurch gekennzeichnet, dass** die Flüssiglinse (3) quer zur optischen Achse (5) einen vorzugsweise kreisförmigen Querschnitt aufweist und an der Peripherie der Flüssiglinse (3) eine Mehrzahl von elektrischen Polen (6) angeordnet sind, die mittels einer Steuereinheit (7) ein beliebiges symmetrisches oder asymmetrisches elektrisches Feld erzeugen, so dass die Oberfläche der Flüssiglinse (3) symmetrisch oder asymmetrisch verformbar ist.

3. Lampe nach einem der Ansprüche 1 oder 2, **dadurch gekennzeichnet, dass** die starre Vorsatzoptik (4) der Leuchteinheit (1) eine Sammel- oder Zerstreuungslinse ist, die eine Fokussierung oder Defokussierung des von der Flüssiglinse (3) verformten Lichtkegels bewirkt.

4. Lampe nach einem der Ansprüche 1 bis 3, **dadurch gekennzeichnet, dass** mehrere Leuchteinheiten (1, 1',1") eine Matrix bilden und jede Leuchteinheit (1, 1', 1") unabhängig von einer anderen Leuchteinheit (1, 1', 1") von der Steuereinheit (7) ansteuerbar ist.

5. Lampe nach einem der Ansprüche 1 bis 4, **dadurch gekennzeichnet, dass** die Lampe mit einer Matrix aus mehreren Leuchteinheiten (1, 1', 1") eine Fahrzeugbeleuchtung mit einem anpassbaren Kurvenlicht bildet, wobei in Abhängigkeit des Straßenverlaufs und/oder des Lenkradeinschlags zumindest bei einer Leuchteinheit (1, 1', 1") der Matrix der Abstrahlwinkel des Lichtkegels gegenüber der optischen Achse (5) durch die Veränderung des elektrischen Feldes an der Flüssiglinse (3) verändert wird.
